# EUROPEAN PATENT SPECIFICATION

(11) **EP 1 850 016 B1**
(45) Date of publication and mention of the grant of the patent: **13.08.2008**
(21) Application number: 06119713.3
(22) Date of filing: 29.08.2006
(51) Int. Cl.: F16B 25/00, F16B 33/02

(54) **Saw Tooth Screw**
Schraube mit Sägegewinde
Vis avec filetage pourvu de dents

(43) Date of publication of application: 31.10.2007
(73) Proprietor: Taiwan Shan Yin International Co., Ltd., 806 Kaohsiung City (TW)
(72) Inventor: Su, Kuo-Tsai, 806, Kaohsiung City (TW)
(74) Representative: Viering, Jentschura & Partner

(56) References cited:
- EP-A- 1 557 576
- EP-B1- 0 141 235
- DE-U1-8202004 002 87
- GB-A- 1 120 991

## Description

### BACKGROUND OF THE INVENTION

### 1. Field of the Invention

The invention relates to a screw according to the preamble of claim 1. The present invention generally relates to a cutting screw requiring less torque for driving in the screw quickly.

### 2. Description of the Related Art

A screw of the above mentioned type is known, e.g., from GB 1,120,991.

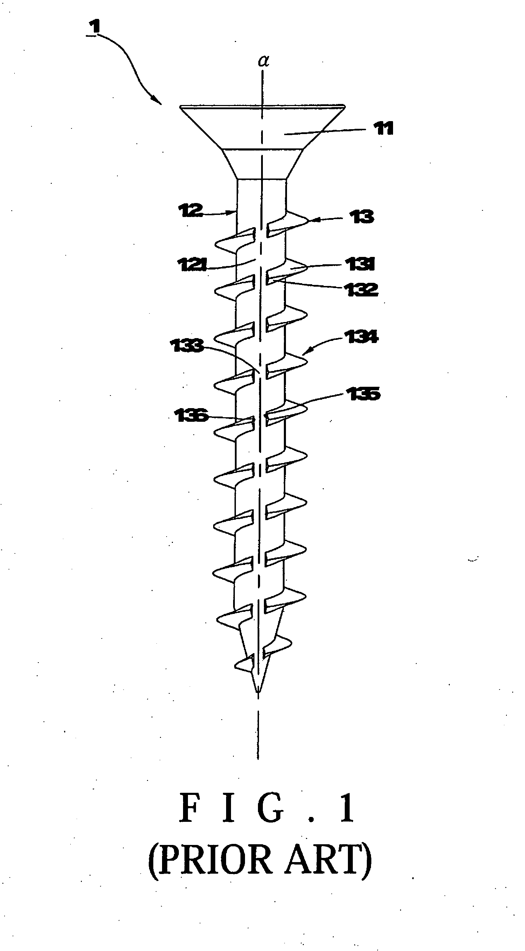

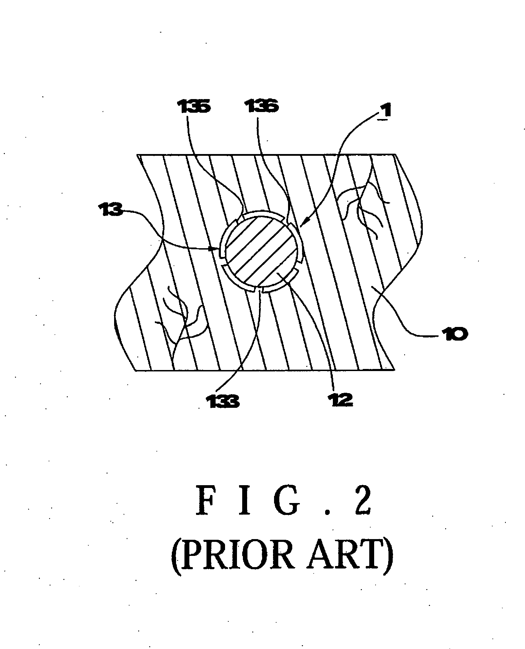

Figures 1 and 2 show an example of a conventional screw 1 which comprises a head 11, a shank 12 extending therefrom and a thread 13 extending helically along the shank 12 wherein the thread 13 comprises an upper flank 131 and an opposite lower flank 132. A plurality of slots 133 is formed on the thread 13 which divides the thread 13 into threaded segments 134 with a first end surface 135 and a second end surface 136. The first end surface 135 and the second end surface 136 are parallel to the shank's axial line "α". While driving in the screw 1, the first end surface 135 cut the object 10 to bring in the screw 1. The first end surface 135 is disabled from cutting the fibers of object 10 efficiently along with rotation of the screw 1 which results in fibers entwined on the shank 12 and in a decrease of the screwing speed.

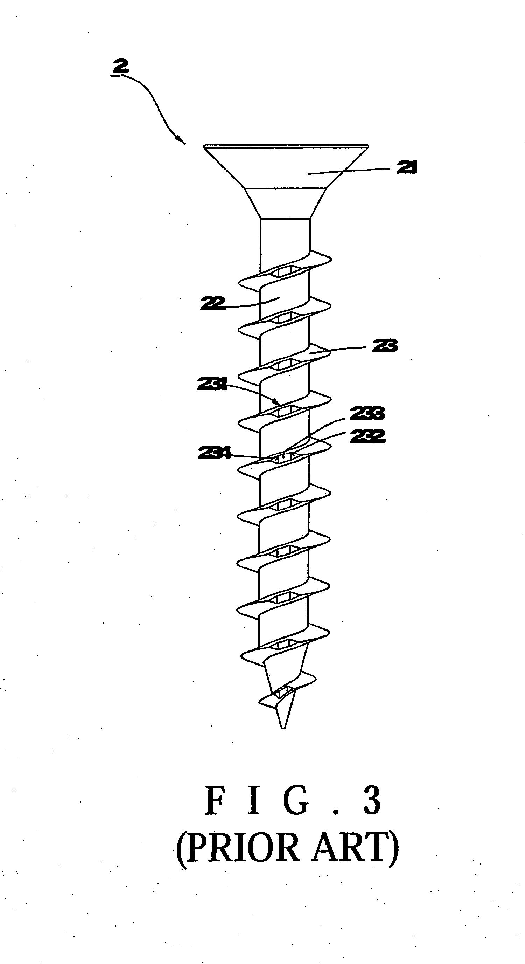

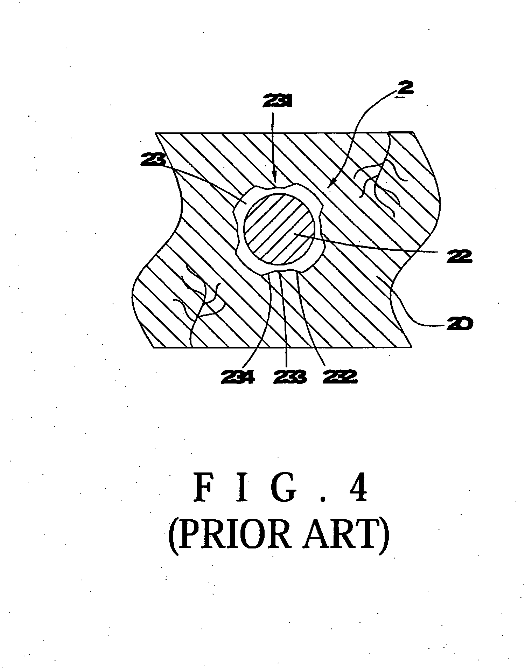

Referring to Fig. 3, another conventional screw 2 comprises a head 21, a shank 22 extending therefrom and a thread 23 helically extending from the shank 22 along the shank axial line "α". A plurality of slots 231 is formed on the thread 23, defining a first end surface 232, a second end surface 233 and a third end surface 234. As shown in Fig. 4, during operation, said slots 231 have large space to receive a great amount of fibers from the object 20 so as to enhance the tightness of the screw 2. However, the construction of the slots 231 caused the first end surface 232 to sharply cut and knock against the object 20. Further, the first end surface 232 can not directly cut up the fibers of the object 20, and hence, the fibers are easily entwined around said shank 12 which results in an increase of screwing friction and a decrease of the screwing speed.

As a further example of a conventional screw, EP 1 557 576 discloses a screw which comprises a head, a shank extending from the head, and a thread helically built upon an outside of the shank, wherein said thread consists of an upper and a lower flank, both forming the outer edge of the thread, wherein inclined axial slots are formed in the thread subdividing the thread into threaded segments with inclined side surfaces to form a cutting edge from which one of the inclined side surface and the lower flank extend.

As another example of a conventional screw, EP 141 235 discloses a thread-forming slot screw with a single-start or multi-start thread extending at least partly over its screw shank, a screw tip and a screw head, wherein the edge forming the crest of the thread extends at least partly in an undulating manner and the thread extends as far as the end of the screw tip. The undulating crest of the thread on the screw tip and at least on the first adjoining thread of the screw shank, at least on its flank surface facing the screw tip, in the section of the wave troughs of the edge, comprises recesses interrupting the flank, whereof the upper boundary is the edge and for this the transition to the remaining flank surface extends without the formation of an edge approximately in the form of a parabola.

As a still further example of a conventional screw, DE 20 2004 002 878 U1 discloses a screw comprising a threaded shank with a force application location at one end and an opposite screw tip. The threaded shank is composed of a shank core and a one-start thread. The thread is formed as an elevation which extends helically at least over a part of the shank core and over the screw tip and is delimited by two flanks which converge in an outer thread edge. The outer edge - at least in a partial region of the thread - extends in a wave form in the radial direction between wave crests and wave troughs. The thread has, at least in the region of one of the flanks, in the region of the wave troughs of the thread edge indentations. These indentations have surfaces which extend in a curved manner, in particular concavely in radial directions and likewise concavely in the circumferential or rotational direction of the screw.

### SUMMARY OF THE INVENTION

The present invention provides a cutting screw which requires less torque for driving in the screw quickly and guides the cutting debris out of the hole.

The present invention provides a cutting screw having the features of claim 1. Further embodiments of the invention are described in the dependent claims.

The present invention will become more apparent from the following description when taken in conjunction with the accompanying drawings.

### BRIEF DESCRIPTION OF THE DRAWINGS

Fig. 1 is a perspective view showing a conventional screw;
Fig. 2 is a sectional top view showing the conventional screw engaged in an object;
Fig. 3 is a perspective view showing another conventional screw;
Fig. 4 is a sectional top view showing another conventional screw engaged in the object;
Fig. 5 is a perspective view showing a first embodiment of a screw according to the present invention;
Fig. 6 is a perspective view showing a second embodiment of a screw according to the present invention; and
Fig. 7 is a sectional top view showing the screw according to the present invention, engaged in the object.

### DETAILED DESCRIPTION OF THE PREFERRED EMBODIMENTS

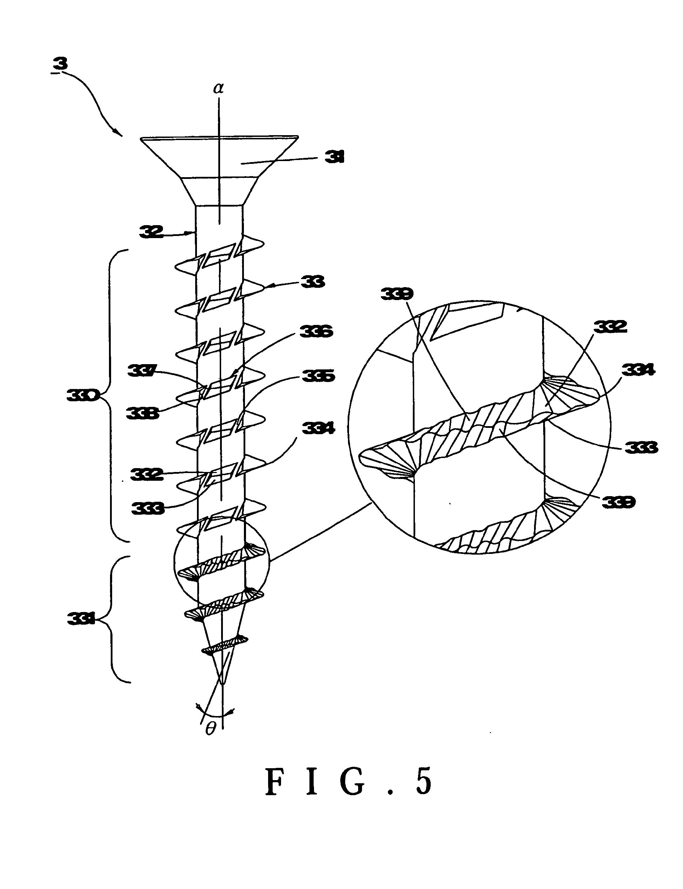

Referring to Fig. 5, a cutting screw 3 according to a first embodiment of the present invention comprises a head 31, a shank 32 longitudinally extending from the head 31 and a thread 33 helically extending about the shank 32 along the shank axial line "α". The thread 33 comprises an upper flank 332 and an opposite lower flank 333 and is subdivided into a first threaded section 330 and a second threaded section 331. The first threaded section 330 extends from said head 31 to the second threaded section 331 which extends therefrom to a distal end of the shank 32, opposite to the head 31. The upper flank 332 and the lower flank 333 form a cutting edge 334 of the thread 33. The thread of the first threaded section 330 is interrupted by a plurality of inclined slots 335 formed therein and inclined with respect to the axial line α of the shank 32 by a helix angle "θ", thereby dividing the first threaded section 330 into a plurality of threaded segments 336. Each of the threaded segments 336 has a first inclined surface 337 and a second inclined surface 338 defined on two side surfaces of each of the threaded segments 336. Regarding a single threaded segment 336, the first inclined surface 337 is inclined to be disposed above the bottom flank 333, and the second inclined surface 338 is inclined to be disposed below the upper flank 332. The thread 33 of the second threaded section 331 comprises a plurality of recesses 339 formed on the upper flank 332 and on the lower flank 333. Further, the recesses 339 of the upper and lower flanks 332, 333 extend from the shank 32 to the outer edge of the thread 33 of the second threaded section 331. The recesses 339 on the upper and lower flanks 332, 333 of the second threaded section 331 are arranged offset with each other thereby forming an undulated cutting edge 334.

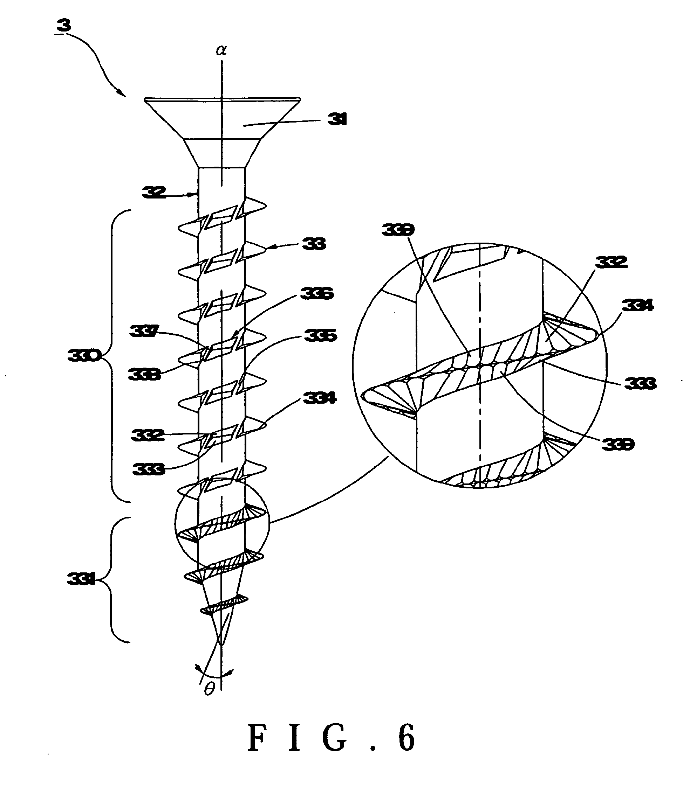

Still further, according to a second embodiment of the present invention, the recesses 339 can be formed as shown in Fig.6, that is, the recesses 339 on the upper and lower flanks 332, 333 of the second threaded section 331 are arranged opposite to each other thereby forming a tooth shaped cutting edge 334.

Although the aforesaid structure of the second embodiment is different to that of the first embodiment, the operation and the effects are the same. Therefore, the following description refers to both the first and the second embodiment of the present invention.

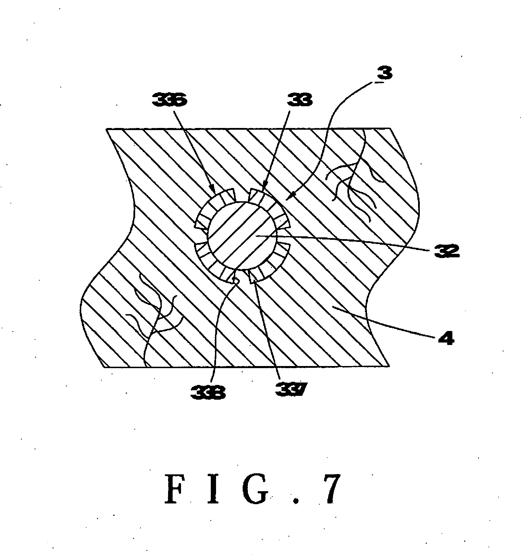

Referring to Figures 5 through 7, while driving in the screw 3, the cutting edge 334 of the thread 33 of the second threaded section 331 initially cuts the fibers of the object 4, which entwine around the shank 32 so as to reduce the screwing resistance.

While continuing with driving in the screw 3, each of the second inclined surfaces 338 of the threaded segments 336 guide the fiber out of the object 4, whereas each of the first inclined surfaces 337 of the threaded segments 336 sharply cut the fibers entwining around the shank 32 of the screw 3 which results in less torque required for driving in the screw. However, the rest of fibers which produced during operation can be guided out by the first and second inclined surfaces 337, 338.After driving in the screw 3, the screw 3 is firmly engaged in the object 4 with an increased stability.

Summarizing the above, the present invention provides a screw 3 comprising a threaded section 331 with a thread 33 having a tooth shaped cutting edge 334 for sharply cutting fibers of an object, and a threaded section 330 with an interrupted thread 33 having threaded segments 336 with first and second inclined surfaces 337, 338 for efficiently cutting up entwined fibers ,for lowering the screwing resistance, enhancing the screwing speed when driving in the screw of the present invention.

## Claims

1. A cutting screw (3) comprising:
a head (31); and
a shank (32) longitudinally extending from said head (31) ;
wherein the shank (32) comprises a first threaded section (330) and a second threaded section (331); the first threaded section (330) extending from the head (31) along the shank (32) to the second threaded section (331) which extends therefrom to a distal end of the screw (3); the thread (33) in the first threaded section (330) being interrupted by a plurality of inclined slots (335) inclined with respect to the axial-line (α) of the shank (32) by an angle (θ), which divide the thread (33) into threaded segments (336); and the thread (33) of the second threaded section (331) having an upper flank (332) and a lower flank (333), facing the head (31) and the distal end, respectively;
**characterized in that** a plurality of recesses (339) are formed on the upper and lower flanks (332, 333) of the helically extending thread (33) of the second threaded section (331), which radially extend from the shank (32) to the outer edge of the thread (33).

2. The cutting screw (3) according to claim 1, wherein the recesses (339) on the upper and lower flanks (332, 333) of the thread (33) of the second threaded section (331) are arranged offset with each other thereby forming an undulated cutting edge (334).

3. The cutting screw (3) according to claim 1, wherein the recesses (339) on the upper and lower flanks (332, 333) of the thread (33) of the second threaded section (331) are arranged opposite to each other thereby forming a tooth shaped cutting edge (334).

## Patentansprüche

1. Schneidschraube (3), aufweisend:
einen Kopf (31); und
einen Schaft (32), der sich von dem Kopf (31) längs erstreckt;
wobei der Schaft (32) einen ersten Gewindeabschnitt (330) und einen zweiten Gewindeabschnitt (331) aufweist; wobei sich der erste Gewindeabschnitt (330) von dem Kopf (31) entlang des Schaftes (32) zu dem zweiten Gewindeabschnitt (331) erstreckt, welcher sich davon zu einem distalen Ende der Schraube (3) erstreckt; wobei das Gewinde (33) in dem ersten Gewindeabschnitt (330) durch eine Mehrzahl von in Bezug auf die axiale Linie (α) des Schaftes (32) um einen Winkel (θ) geneigten Schrägschlitzen (335) unterbrochen ist, welche das Gewinde (33) in Gewindesegmente (336) teilt; und wobei das Gewinde (33) des zweiten Gewindeabschnitts (331) eine obere Flanke (332) und eine untere Flanke (333) aufweist, die dem Kopf (31) bzw. dem distalen Ende zugewandt sind;
**dadurch gekennzeichnet, dass** in den oberen und unteren Flanken (332, 333) des schraubenförmig sich erstreckenden Gewindes (33) des zweiten Gewindeabschnitts (331) eine Mehrzahl von Ausnehmungen (339) ausgebildet sind, welche sich von dem Schaft (32) zu dem äußeren Rand des Gewindes (33) radial erstrecken.

2. Schneidschraube (3) nach Anspruch 1, wobei die Ausnehmungen (339) in den oberen und unteren Flanken (332, 333) des Gewindes (33) des zweiten Gewindeabschnitts (331) versetzt zueinander angeordnet sind, wodurch ein gewellter Schneidrand (334) gebildet wird.

3. Schneidschraube (3) nach Anspruch 1, wobei die Ausnehmungen (339) in den oberen und unteren Flanken (332, 333) des Gewindes (33) des zweiten Gewindeabschnitts (331) entgegengesetzt zueinander angeordnet sind, wodurch ein zahnförmiger Schneidrand (334) gebildet wird.

## Revendications

1. Vis de coupe (3) comprenant :
une tête (31) ; et
une tige (32) s'étendant longitudinalement depuis ladite tête (31) ;
dans laquelle la tige (32) comprend une première partie filetée (330) et une deuxième partie filetée (331) ; la première partie filetée (330) s'étendant le long de la tige (32) à partir de la tête (31) jusqu'à la deuxième partie filetée (331) qui s'étend de là jusqu'à une extrémité distale de la vis (3) ; le filet (33) de la première partie filetée (330) étant interrompu par une pluralité de fentes (335) qui sont inclinées par rapport à la ligne axiale (α) de la tige (32) suivant un angle (θ) et qui partagent le filet (33) en segments filetés (336) ; et où le filet (33) de la deuxième partie filetée (331) possède un flanc supérieur (332) et un flanc inférieur (333) qui font respectivement face à la tête (31) et à l'extrémité distale ;
**caractérisé en ce qu'**une pluralité d'évidements (339) sont formés sur les flancs supérieur et inférieur (332, 333) du filet à extension hélicoïdale de la deuxième partie filetée (331), lesquels évidements s'étendent radialement depuis la tige (32) jusqu'au bord extérieur du filet (33).

2. Vis de coupe (3) selon la revendication 1, dans laquelle les évidements (339) des flancs supérieur et inférieur (332, 333) du filet (33) de la deuxième partie filetée (331) sont disposés en étant décalés les uns par rapport aux autres pour former un bord de coupe ondulé (334).

3. Vis de coupe (3) selon la revendication 1, dans laquelle les évidements (339) des flancs supérieur et inférieur (332, 333) du filet (33) de la deuxième partie filetée (331) sont disposés en étant opposés les uns par rapport aux autres pour former un bord de coupe de forme dentelée (334).
